(19) Europäisches Patentamt
European Patent Office
Office européen des brevets

(11) EP 3 070 868 B1

(12) FASCICULE DE BREVET EUROPEEN

(45) Date de publication et mention de la délivrance du brevet:
**19.07.2017 Bulletin 2017/29**

(51) Int Cl.:
*H04L 1/18* (2006.01)          *H04L 12/26* (2006.01)
*H04L 1/24* (2006.01)

(21) Numéro de dépôt: **16156322.6**

(22) Date de dépôt: **18.02.2016**

(54) **PROCÉDÉ DE SURVEILLANCE D'UNE COMMUNICATION ENTRE UN ÉQUIPEMENT ÉMETTEUR ET UN ÉQUIPEMENT RÉCEPTEUR**

VERFAHREN ZUR ÜBERWACHUNG EINER KOMMUNIKATION ZWISCHEN EINEM SENDE- UND EINEM EMPFANGSGERÄT

METHOD FOR MONITORING COMMUNICATION BETWEEN A TRANSMITTER AND A RECEIVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.03.2015 FR 1552094**

(43) Date de publication de la demande:
**21.09.2016 Bulletin 2016/38**

(73) Titulaire: **Schneider Electric Industries SAS 92500 Rueil-Malmaison (FR)**

(72) Inventeurs:
• **ROGER, Mireille**
  **16600 Ruelle-sur-Touvre (FR)**
• **TARDIVON, Alain**
  **16170 Gourville (FR)**
• **DALLET, Hervé**
  **16800 Soyaux (FR)**

(74) Mandataire: **Dufresne, Thierry**
  **Schneider Electric Industries SAS**
  **Service Propriété Industrielle**
  **35 rue Joseph Monier - CS 30323**
  **92506 Rueil-Malmaison Cedex (FR)**

(56) Documents cités:
**EP-A1- 2 887 585          US-A1- 2008 130 542**
**US-A1- 2012 106 369**

**Description**

**Domaine technique de l'invention**

La présente invention se rapporte à un procédé de surveillance d'une communication entre un équipement émetteur et un équipement récepteur.

**Etat de la technique**

Dans le milieu industriel, la communication entre les équipements se doit d'être fiable car elle participe au contrôle-commande des machines. Soit la communication affiche intrinsèquement un niveau élevé de fiabilité, ce qui peut s'avérer difficile à obtenir, soit elle doit être surveillée afin de détecter les erreurs de communication entre les équipements. Dans ce deuxième cas, il s'agit de pouvoir émettre, en plus des trames de commande échangées entre les équipements, des trames de diagnostic pour informer, avec un niveau de fiabilité défini, de l'état de la communication. L'émission de trames de diagnostic permet de détecter les erreurs de communication et ainsi d'alerter de ces erreurs. Pour permettre de détecter une erreur de communication avec une fiabilité maximale, la solution la plus aisée consiste à émettre des trames de diagnostic à une fréquence fixe adaptée à la fréquence d'émission des trames de commande la plus élevée. Cependant, l'émission de trames à cette fréquence fixe entraîne une forte occupation, voire une saturation de la liaison de communication et une surconsommation d'énergie électrique pour les équipements impliqués.

Par ailleurs, dans un environnement industriel, des mouvements de machine, des perturbations électromagnétiques, des déplacements de masse métallique, des mouvements de personnes dans la zone d'échange de données, la présence d'autres équipements émetteurs, sont susceptibles de créer des perturbations aléatoires dans l'échange de données entre l'équipement émetteur et l'équipement récepteur. Ces phénomènes sont notamment susceptibles de perturber la communication entre l'équipement émetteur et l'équipement récepteur.

La demande de brevet US2012/106369 décrit une méthode de surveillance de communication.

Le but de l'invention est de proposer un procédé de surveillance d'une communication entre un équipement émetteur et un équipement récepteur, qui permet d'optimiser la fréquence d'émission des trames de diagnostic, permettant ainsi d'éviter de saturer la liaison de communication et d'entraîner une surconsommation d'énergie électrique tout en garantissant une fiabilité élevée sur l'état de la communication et d'adapter en temps réel l'émission des trames de diagnostic à l'état de la communication, par la prise en compte des perturbations.

Par ailleurs, au sein d'une même application, la fréquence d'émission des trames de commande n'est pas forcément fixe. En phase de réglage, la fréquence d'émission peut être élevée alors qu'elle peut être faible en phase de fonctionnement normal. La plupart des protocoles de surveillance de communication entre deux équipements ne tiennent pas compte de ces différents aspects.

**Exposé de l'invention**

L'invention concerne un procédé de surveillance selon la revendication 1. Selon une particularité, le procédé comporte une étape de révision de la durée $\Delta t$ prédéterminée entre l'émission de deux trames de commande.

Selon une autre particularité, le procédé comporte une étape de limitation à une valeur maximale de la durée entre deux trames de diagnostic successives, lorsque la durée entre un premier instant d'émission d'une trame de diagnostic de rang x et un deuxième instant d'émission d'une trame de diagnostic de rang x dépasse ladite valeur maximale.

La solution de l'invention permet ainsi de tenir compte du fait que des perturbations empêchent que les trames de commande soient correctement transmises par l'émetteur ou reçues par le récepteur et d'adapter l'émission des trames de diagnostic à la valeur du taux de probabilité d'apparition d'un échec de communication recalculé à chaque émission de trame de commande.

**Brève description des figures**

D'autres caractéristiques et avantages vont apparaître dans la description détaillée qui suit faite en regard des dessins annexés dans lesquels :

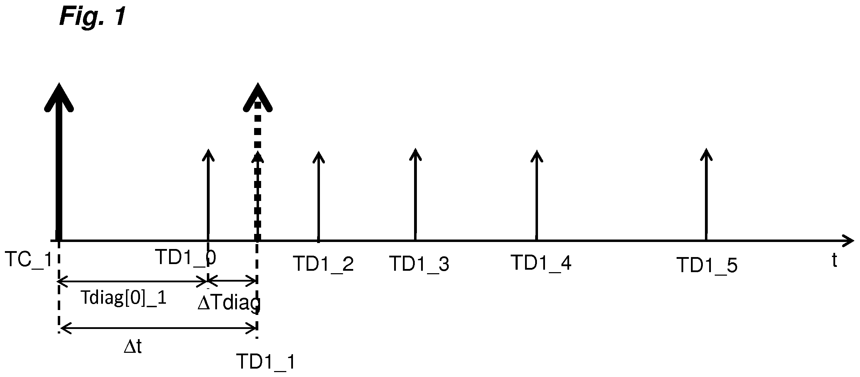

- les figures 1 à 4 représentent des diagrammes temporels illustrant les différents principes de fonctionnement de l'invention.

**Description détaillée d'au moins un mode de réalisation**

Dans la suite de la description :

- la notation « TC_i » désigne à la fois une trame de commande et l'instant d'émission de cette trame de commande,

- la notation « TDx_i » désigne à la fois une trame de diagnostic et l'instant d'émission de cette trame de diagnostic.

Le procédé de l'invention s'applique à une installation comprenant au moins un équipement émetteur et un équipement récepteur connectés entre eux à travers un réseau de communication de type filaire ou sans-fil. Bien entendu, chacun de ces équipements pourra exercer les deux fonctions d'émetteur et de récepteur.
Dans cette installation, l'équipement émetteur envoie des trames de commande à l'équipement récepteur, par exemple pour le contrôle-commande d'une machine. La durée $\Delta t$ entre l'émission de la trame de commande TC_i et la trame de commande suivante TC_i+1 (i étant un entier allant de 1 à n et définissant le rang de la trame de commande, n étant supérieur ou égal à 1) n'est pas forcément fixe.
Le procédé de l'invention consiste à surveiller la communication entre l'équipement émetteur et l'équipement récepteur. Il consiste en l'émission de trames de diagnostic TDx_i (x étant un entier supérieur à 0 et définissant le rang de la trame de diagnostic après la trame de commande TC_i) dédiées à la surveillance de la communication. L'objectif de la surveillance est de connaitre l'état de la communication avant la prochaine trame de commande TC_i pour pouvoir s'assurer que celle-ci ait le maximum de chance d'être transmise et reçue sans échec. Pour cela, au moins une trame de diagnostic TDx_i doit être émise avant la probable prochaine émission d'une trame de commande TC_i. De manière générale, l'instant d'émission de la première trame de diagnostic TD0_i venant après une trame de commande TC_i s'exprime par la relation suivante :

$$TD0\_i = TC\_i + Tdiag[0]\_i$$

Dans laquelle TD0_i correspond à l'instant d'émission de la trame de diagnostic TD0_i et avec :

$$Tdiag[0]\_i = \Delta t - \Delta tdiag \qquad (1)$$

Dans laquelle :

- $\Delta t$ est une valeur minimale prédéfinie, correspondant à la durée minimale à respecter entre deux trames de commande et permettant de s'assurer de l'émission d'une trame de diagnostic avant la prochaine trame de commande. Pour adapter l'émission des trames de diagnostic à la fréquence d'émission des trames de commande, la durée $\Delta t$ pourra être révisée.

- $\Delta tdiag$ est une durée à respecter pour garantir une fiabilité prédéfinie sur l'état de la communication et s'exprime de la manière suivante :

$$\Delta tdiag = \Delta t \frac{Ln(Fiab)}{Ln(1 - \tau_{\text{échec}})} \qquad (2)$$

Dans laquelle :

- Fiab correspond à une valeur de fiabilité prédéfinie pour la communication, par exemple 99%,

- $\tau_{\text{échec}}$ correspond au taux de probabilité d'apparition d'un échec de communication entre deux émissions de trames de commande TC_i.

L'instant d'émission TD0_i de la première trame de diagnostic est donc déterminé à partir de la durée minimale à respecter entre l'émission de deux trames commande, celle-ci étant connue de l'équipement émetteur.
Sur les figures annexées, la fin de la durée $\Delta t$ est représentée par une flèche verticale en pointillés. Cet instant d'émission ne correspond pas à l'émission d'une trame de commande mais à l'instant à partir duquel une trame de commande pourrait être émise.

Selon l'invention, tant qu'une nouvelle trame de commande TC_i n'a pas été envoyée par l'équipement émetteur, celui-ci envoie, après la trame de diagnostic initiale, d'autres trames de diagnostic à l'équipement récepteur. Préférentiellement, les trames de diagnostic sont émises à une fréquence variable, permettant d'éviter une saturation de la communication et une surconsommation d'énergie de la part des équipements.

Les instants d'émission des trames de diagnostic, qui suivent la première trame de diagnostic émise TD0_i, sont déterminés à partir d'une fonction croissante comme par exemple une suite géométrique choisie pour obtenir des instants d'émission séparés d'une durée variable. La fonction croissante permettant de déterminer les instants d'émission des trames de diagnostic TDx_i (avec x supérieur ou égal à 1) est par exemple la suite géométrique suivante :

$$TDx\_i = TDx\_i-1 + Tdiag[x]\_i$$

$$Tdiag[x]\_i = r(x) \times Tdiag\,[x-1]\_i \qquad\qquad (3)$$

Dans laquelle r(x) correspond à la raison de la suite.

Cette fonction croissante permet de faire évoluer la durée entre deux trames de diagnostic, avant l'émission de la prochaine trame de commande, tout en assurant une fiabilité maximale (proche de 100%). La durée entre la dernière trame de commande et la prochaine trame de commande augmentant, l'occurrence d'un échec de communication diminue puisque ce taux de fiabilité est considéré constant entre deux trames de commande. Aussi, même si les trames de diagnostic sont de plus en plus éloignées les unes des autres, la fiabilité sur l'état de la communication reste élevée, proche de 100%. Tant qu'une trame de commande n'a pas été émise par l'équipement émetteur, des trames de diagnostic sont émises aux instants d'émission déterminés grâce à la relation (3) ci-dessus.

Après chaque émission de trame de commande, le procédé de diagnostic est réinitialisé et l'instant d'émission de la prochaine trame de diagnostic est déterminé grâce à la relation (1) ci-dessus et les instants suivants sont déterminés grâce à la relation (3).

Sur la figure 1, des trames de diagnostic sont émises aux instants d'émission TD1_0 à TD_5 déterminés à partir de la relation (3) ci-dessus. Sur cette figure, on remarque bien que la fréquence d'émission entre les trames de diagnostic n'est pas fixe.

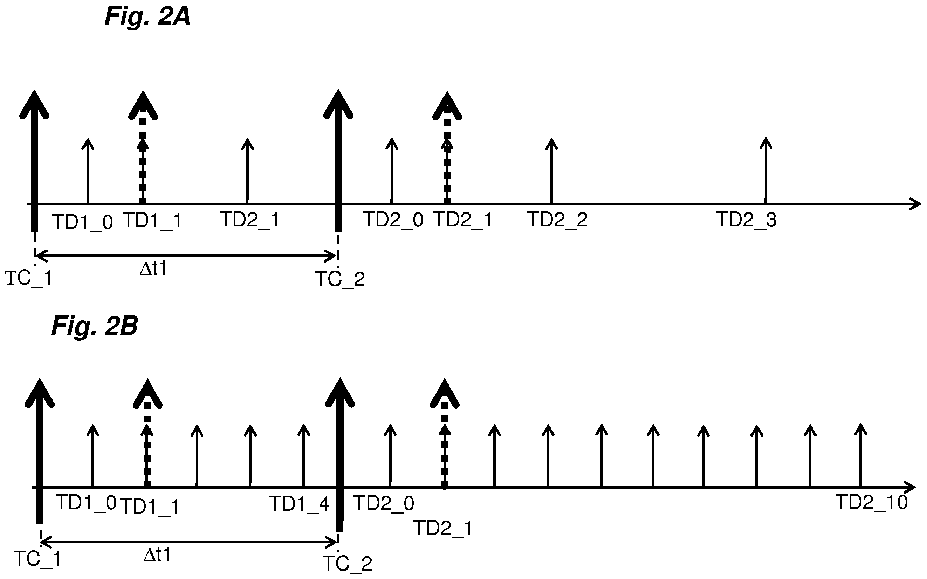

Les figures 2A et 2B permettent de comparer la solution de l'invention à une solution de l'état de la technique, dans laquelle des trames de diagnostic sont émises à une fréquence fixe. Sur la figure 2A, correspondant au procédé de l'invention, la surveillance est réalisée avec seulement l'émission de trois trames de diagnostic entre les deux premières trames de commande. Sur la figure 2B, correspondant à la solution de l'état de la technique, pour un même taux de fiabilité de la communication, cinq trames de diagnostic doivent être émises sur la même durée pour surveiller la communication. Sur une durée plus longue entre deux trames de commande de données, quatre trames de diagnostic sont nécessaires dans le cadre de l'invention alors que dix trames de diagnostic seront nécessaires dans la solution à fréquence fixe de l'état de la technique.

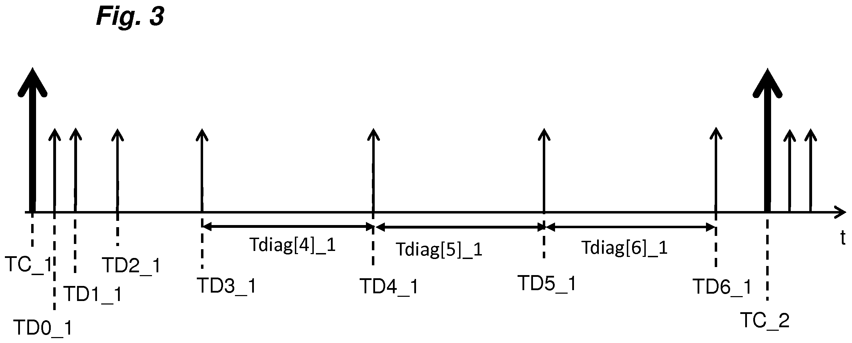

Avantageusement, si la durée entre deux trames de diagnostic devient trop longue, celle-ci peut être plafonnée à une valeur déterminée. Cette valeur sera par exemple la durée moyenne d'émission des trames de commande. La figure 3 illustre une telle solution dans laquelle les trames de diagnostic TD4_1, TD5_1 et TD6_1 sont émises à une période fixe, celle-ci correspondant à une valeur maximale, qui peut être mémorisée par exemple par l'équipement émetteur.

Par ailleurs, au sein d'une même application, la fréquence d'émission des trames de commande n'est pas forcément fixe. En phase de réglage, elle peut être élevée et plus faible en phase de fonctionnement normal. Pour tenir compte de ces variations le procédé de l'invention permet de réviser en temps réel la durée entre chaque trame de commande. Combinée au mode de détermination des trames de diagnostic décrit ci-dessus, la révision de la variabilité des trames de commande permettra d'optimiser encore plus le nombre de trames de diagnostic émises.

Le taux d'échec $\tau_{échec}$ reflète le taux de trames de commande incorrectement reçues. Il est par exemple connu de faire acquitter la réception d'une trame de commande par l'équipement récepteur pour s'assurer d'une bonne transmission des trames de commande. L'équipement émetteur est alors averti de la réception ou de la non-réception de chaque trame de commande TC_i et peut lancer l'action qui convient. Il est également bien connu que l'équipement émetteur fasse plusieurs tentatives d'émission d'une trame de commande avant de conclure au non-acquittement de la trame de commande, ceci afin de masquer les ruptures de communication intempestives de très faible durée. Le calcul du taux d'échec $\tau_{échec}$ peut alors par exemple s'appuyer sur ce processus d'acquittement en mesurant le nombre de trames acquittées par rapport au nombre de trames émises.

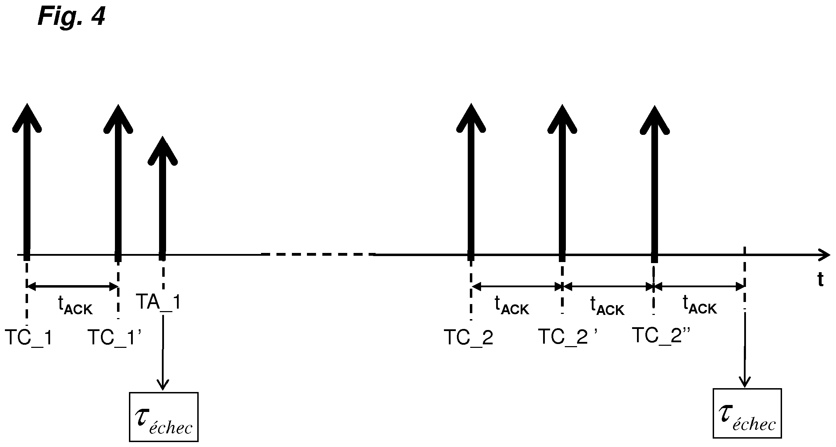

La figure 4 illustre le principe de mise à jour du taux de probabilité d'apparition d'un échec de communication :

- L'équipement émetteur émet une première trame de commande TC_1 à destination de l'équipement récepteur.

- Après une durée déterminée $t_{ACK}$, l'équipement émetteur n'a reçu aucune trame d'acquittement de cette première trame de commande et émet de nouveau une trame de commande TC_1'.

- L'équipement émetteur reçoit une trame d'acquittement TA_1 de cette dernière trame de commande TC_1'.

- L'équipement émetteur diminue le taux de probabilité d'apparition d'un échec $\tau_{\text{échec}}$.

- L'équipement émetteur procède à plusieurs tentatives d'émission d'une nouvelle trame de commande TC_2, TC_2', TC_2" sans recevoir de trame d'acquittement.

- Après la durée $t_{ACK}$, l'équipement émetteur augmente le taux de probabilité d'apparition d'un échec $\tau_{\text{échec}}$.

Après chaque émission d'une trame de commande, le taux d'échec $\tau_{\text{échec}}$ peut ainsi être réactualisé.

Par ailleurs, le taux de probabilité d'apparition d'un échec de communication est défini en relation avec $\Delta$tdiag dans l'expression suivante, déjà définie ci-dessus :

$$\Delta\text{tdiag} = \Delta t \frac{\text{Ln(Fiab)}}{\text{Ln}(1-\tau_{\text{échec}})} \qquad (2)$$

La révision du taux de probabilité d'apparition d'un échec de communication aura donc une influence sur l'optimisation du nombre de trames de diagnostic émises.

L'invention présente ainsi plusieurs avantages, notamment :

- D'optimiser le nombre de trames de diagnostic émises, en révisant le taux de probabilité d'apparition d'un échec de communication, tout en garantissant une fiabilité élevée sur l'état de la communication,

- De garantir une fiabilité sur l'état de la communication proche de 100%, tout en évitant de saturer la liaison de communication et d'entraîner une surconsommation d'énergie électrique,

- D'adapter la fréquence d'émission des trames de diagnostic à la fréquence d'émission des trames de commande,

- D'être simple à mettre en oeuvre et de pouvoir s'adapter à des réseaux de communication de type filaire ou sans-fil.

**Revendications**

1. Procédé de surveillance d'une communication entre un équipement émetteur et un équipement récepteur, ledit équipement émetteur transmettant des trames de commande à l'équipement récepteur, ledit procédé comportant les étapes suivantes :

   - émission par l'équipement émetteur de n trames de commande TC_i à destination de l'équipement récepteur, i étant un nombre entier allant de 1 à n et définissant le rang de chaque trame de commande, n étant un nombre entier supérieur ou égal à 1,
   - détermination d'un instant d'émission d'une trame de diagnostic de rang 0 après l'émission d'une trame de commande TC_i, ledit instant d'émission de ladite trame de diagnostic étant déterminé de la manière suivante :

   TD0_i=TC_i+Tdiag[0]_i

   - dans laquelle TD0_i correspond à l'instant d'émission de la trame de diagnostic de rang 0 suivant la trame de commande TC_i et avec :

   Tdiag[0]_i = $\Delta$t - $\Delta$tdiag

   - dans laquelle :

• Δt correspond à une durée minimale prédéterminée entre l'émission de deux trames de commande,
• Δtdiag correspond à une durée à respecter pour garantir une valeur de fiabilité prédéfinie sur l'état de la communication, et s'exprime par la relation suivante :

$$\Delta tdiag = \Delta t \frac{\text{Ln(Fiab)}}{\text{Ln}(1 - \tau_{\text{échec}})}$$

- Dans laquelle :

- Fiab correspond à la valeur de fiabilité prédéfinie,
- $\tau_{\text{échec}}$ correspond à un taux de probabilité d'apparition d'un échec de communication entre deux trames de commande, ledit taux étant recalculé après chaque émission d'une trame de commande,

- émission par l'équipement émetteur de ladite trame de diagnostic à l'instant d'émission déterminé, à destination de l'équipement récepteur,
- détermination à partir d'une fonction croissante des instants d'émission des trames de diagnostic TDx_i suivantes de rang x,
- émission desdites trames de diagnostic de rang x par l'équipement émetteur à destination de l'équipement récepteur.

2. Procédé selon la revendication 1, comportant une étape additionnelle de révision de la durée Δt prédéterminée entre l'émission de deux trames de commande.

3. Procédé selon la revendication 1, comportant une étape additionnelle de limitation à une valeur maximale de la durée entre deux trames de diagnostic successives, lorsque la durée entre un premier instant d'émission d'une trame de diagnostic de rang x et un deuxième instant d'émission d'une trame de diagnostic de rang x dépasse ladite valeur maximale.

**Patentansprüche**

1. Verfahren zur Überwachung einer Kommunikation zwischen einem Sendegerät und einem Empfangsgerät, wobei das Sendegerät Steuerrahmen an das Empfangsgerät sendet, wobei das Verfahren die folgenden Schritte umfasst:

- Senden, durch das Sendegerät, von n Steuerrahmen TC_i an das Empfangsgerät, wobei i eine ganze Zahl von 1 bis n ist und den Rang jedes Steuerrahmens definiert, wobei n eine ganze Zahl größer oder gleich 1 ist,
- Bestimmen eines Sendemoments eines Diagnoserahmens des Rangs 0 nach dem Senden eines Steuerrahmens TC_i, wobei der Sendemoment des Diagnoserahmens auf folgende Weise bestimmt wird:

$$TD0\_i = TC\_i + Tdiag[0]\_i$$

- wobei TD0_i einem Sendemoment des Diagnoserahmens des Rangs 0 entspricht, der dem Steuerrahmen TC_i folgt, und wobei:

$$Tdiag[0]\_i = \Delta t - \Delta tdiag$$

- wobei:

• Δt einer vorherbestimmten minimalen Dauer zwischen dem Senden der beiden Steuerrahmen entspricht,
• Δtdiag einer Dauer entspricht, an die man sich halten muss, um einen vordefinierten Zuverlässigkeitswert in Bezug auf den Kommunikationszustand zu garantieren, und durch die folgende Beziehung ausgedrückt wird:

$$\Delta \text{tdiag} = \Delta t \frac{Ln(Fiab)}{Ln(1-\tau_{\acute{e}chec})}$$

wobei:

- Fiab dem vordefinierten Zuverlässigkeitswert entspricht,
- $\tau_{\acute{e}chec}$ einem Wahrscheinlichkeitsgrad des Auftretens eines Ausfalls der Kommunikation zwischen zwei Steuerrahmen entspricht, wobei der Grad nach jedem Senden eines Steuerrahmens wieder berechnet wird,

- Senden, durch das Sendegerät, des Diagnoserahmens in dem bestimmten Sendemoment an das Empfangsgerät,
- Bestimmung folgender Diagnoserahmen TDx_i des Rangs x aus einer steigenden Funktion der Sendemomente,
- Senden der Diagnoserahmen des Rangs x durch das Sendegerät an das Empfangsgerät.

2. Verfahren nach Anspruch 1, umfassend einen zusätzlichen Schritt der Revision der vorherbestimmten Dauer $\Delta t$ zwischen dem Senden von zwei Steuerrahmen.

3. Verfahren nach Anspruch 1, umfassend einen zusätzlichen Schritt der Begrenzung der Dauer zwischen zwei aufeinanderfolgenden Diagnoserahmen auf einen maximalen Wert, wenn die Dauer zwischen einem ersten Sendemoment eines Diagnoserahmens des Rangs x und einem zweiten Sendemoment eines Diagnoserahmens des Rangs x den maximalen Wert überschreitet.

**Claims**

1. Method for monitoring a communication between a transmitting device and a receiving device, said transmitting device transmitting control frames to the receiving device, said method comprising the following steps:

- transmission by the transmitting device of n control frames TC_i to the receiving device, i being an integer number ranging from 1 to n and defining the rank of each control frame, n being an integer number greater than or equal to 1,
- determination of an instant of transmission of a diagnostic frame of rank 0 after the transmission of a control frame TC_i, said instant of transmission of said diagnostic frame being determined as follows:

$$TD0\_i = TC\_i + Tdiag[0]\_i$$

- in which TD0_i corresponds to the instant of transmission of the diagnostic frame of rank 0 following the control frame TC_i and with:

$$Tdiag[0]\_i = \Delta t - \Delta tdiag$$

- in which:

• $\Delta t$ corresponds to a predetermined minimum time between the transmission of two control frames,
• $\Delta tdiag$ corresponds to a time to be observed to guarantee a predefined reliability value concerning the state of the communication, and is expressed by the following relationship:

$$\Delta \text{tdiag} = \Delta t \frac{\text{Ln}(\text{Fiab})}{\text{Ln}(1 - \tau_{\text{fail}})}$$

- In which:

- Fiab corresponds to the predefined reliability value,
- $\tau_{fail}$ corresponds to a rate of probability of occurrence of a communication failure between two control frames, said rate being revised according to whether the receiving device has received each control frame or not,

- transmission by the transmitting device of said diagnostic frame at the determined transmission instant, to the receiving device,
- determination from an increasing function of the instants of transmission of the following diagnostic frames TDx_i of rank x,
- transmission of said diagnostic frames of rank x by the transmitting device to the receiving device.

2. Method according to Claim 1, comprising an additional step of revising the predetermined time $\Delta t$ between the transmission of two control frames.

3. Method according to Claim 1, comprising an additional step of limitation to a maximum value of the time between two successive diagnostic frames, when the time between a first instant of transmission of a diagnostic frame of rank x and a second instant of transmission of a diagnostic frame of rank x exceeds said maximum value.

Fig. 1

Fig. 2A

Fig. 2B

EP 3 070 868 B1

**Fig. 3**

Fig. 4

$t_{ACK}$  TA_1

TC_1  TC_1'

$t_{ACK}$  $t_{ACK}$  $t_{ACK}$

TC_2  TC_2'  TC_2''

$\tau_{\acute{e}chec}$

$\tau_{\acute{e}chec}$

t

EP 3 070 868 B1

**EP 3 070 868 B1**

## RÉFÉRENCES CITÉES DANS LA DESCRIPTION

**Documents brevets cités dans la description**

- US 2012106369 A